# FASCICULE DE BREVET EUROPEEN

(11) **EP 2 411 308 B1**
(45) Date de publication et mention de la délivrance du brevet: **30.10.2013**
(21) Numéro de dépôt: 10715977.4
(22) Date de dépôt: 25.03.2010
(51) Int. Cl.: B65G 57/24

(54) **PALETTISEUR AVEC PREPARATION DE COUCHES DE CAISSES**
PALETTIERER MIT SCHACHTELSCHICHTBEREITUNG
PALLETIZER WITH BOX LAYER PREPARATION

(30) Priorité: 27.03.2009 FR 0901495
(43) Date de publication de la demande: 01.02.2012
(73) Titulaire: Sidel Participations, 76930 Octeville sur Mer (FR)
(72) Inventeur: GERMAIN, Dominique, F-76930 Octeville-sur-Mer (FR); SAUVAGEOT, Fabrice, F-76930 Octeville-sur-Mer (FR)
(74) Mandataire: Cabinet Plasseraud
(86) Numéro de dépôt international: PCT/FR2010/050540
(87) Numéro de publication internationale: WO 2010/109140

(56) Documents cités:
- DE-A1- 2 511 207
- DE-A1- 2 808 129
- FR-A1- 2 897 341
- GB-A- 1 129 944
- GB-A- 2 136 404
- JP-A- 49 061 873
- US-A- 3 529 732
- US-A- 4 708 564
- US-A- 5 049 030
- US-A1- 2005 063 815

## Description

La présente invention concerne les installations de palettisation et, plus particulièrement, un palettiseur qui comprend un dispositif de préparation et de préempilage de couches de caisses ou autres (packs, casiers, barquettes...) avant leur dépose sur une palette, ainsi que le procédé correspondant.

Dans ce domaine de la palettisation, le palettiseur fait partie de ce que l'on appelle la fin de ligne, c'est-à-dire qu'il reçoit des caisses de produits qui sortent d'une installation de conditionnement à une certaine cadence, laquelle cadence est bien souvent elle-même fixée par les cadences des installations précédentes où s'effectuent la préparation et la confection de ces produits à palettiser.

Dans ce contexte, le palettiseur doit répondre à des contraintes de toutes sortes : tout d'abord, - des contraintes liées à la nature des produits qui sont plus ou moins fragiles, plus ou moins stables et plus ou moins réguliers, - des contraintes liées aux cadences car il n'est pas envisageable d'arrêter une ligne complète de fabrication en dehors des arrêts qui ont été expressément programmés, et - des contraintes liées à l'environnement immédiat du palettiseur comme la surface disponible pour son implantation, par exemple.

Il est connu, comme décrit dans le document DE 25 11 207, de préparer une paire de couches de caisses pour améliorer les cadences de palettisation. La première couche est préparée à un poste qui se situe en amont du poste de palettisation et elle est soulevée par un dispositif approprié pendant qu'une deuxième couche est préparée. Dès que cette deuxième couche est prête, la première couche est déposée sur la deuxième et les deux couches sont amenées à un poste où elles sont prises en charge par un chariot qui les transfère au poste de palettisation proprement dit. Les deux couches sont retenues par une barrière pendant que le chariot retourne à sa position de prise en charge d'un autre groupe de couches et elles se déposent automatiquement, par simple gravité, sur la palette ou sur les couches déjà en place sur ladite palette.

Il est également connu, comme décrit dans le document FR 2 861 714, de préparer plusieurs couches de produits et de temporiser leur palettisation pendant l'opération de changement de palettes qui constitue un temps mort dans le cycle de palettisation.

Les différentes couches de produits sont préparées directement au niveau du poste de palettisation sur des tables de pré-groupages qui sont superposées verticalement au-dessus de la palette à charger et ces couches sont placées en attente pendant le temps du changement de palettes, c'est-à-dire pendant les opérations d'évacuation de la palette qui est pleine et de mise en place d'une nouvelle palette.

Ces différentes couches en attente sont ensuite déposées, chacune à leur tour, sur la nouvelle palette vide, au poste de palettisation.

Le document FR 2 897 341 décrit un palettiseur avec les caractéristiques du préambule de la revendication 1, qui répond lui aussi à une partie des contraintes détaillées auparavant et, en particulier, aux contraintes liées à la nature des produits ; il est aménagé pour permettre la préparation de palettes avec des caisses contenant des produits relativement fragiles comme, par exemple, des bouteilles.

Ce palettiseur est aménagé pour réaliser en douceur les opérations de regroupement des caisses de produits qui impliquent un accostage entre caisses comme, notamment, les opérations qui consistent à regrouper les caisses qui sont sous forme de rangs pour les rassembler sous forme de couches, lesquelles couches sont ensuite transférées sur une table de palettisation qui est chargée de déposer chaque couche sur la palette prévue à cet effet.

Toutefois, avec l'augmentation des cadences de production des produits et des cadences de conditionnement de ces produits, on constate que, au niveau d'un poste de palettisation, le temps qui est nécessaire pour mener à bien l'opération d'évacuation d'une palette pleine, ajouté au temps nécessaire à l'opération de mise en place d'une nouvelle palette, vide, est bien supérieur au temps qu'il faut pour préparer une couche de caisses, et qu'il y a là un frein à l'amélioration des cadences.

Cette contrainte de temps, au niveau du poste de palettisation, règle l'organisation de toute l'installation de palettisation ; en terme de cadence, c'est donc le poste de palettisation qui détermine les cadences en amont, c'est-à-dire la cadence de préparation des couches de caisses et aussi la cadence d'arrivée de ces caisses sur le palettiseur.

Pour certaines installations de palettisation, où les contraintes liées à l'implantation du palettiseur sont sévères, les temps nécessaires aux opérations de déplacement des palettes, pleines ou vides, peuvent être relativement importants, à cause, par exemple, de la nécessité d'effectuer des changements d'orientation des palettes.

Par ailleurs, la table du poste de palettisation lui-même a ses propres cadences et celles-ci sont liées aux différentes opérations qui sont réalisées par cette table de dépose ou de palettisation. En effet, cette table de dépose, ou de palettisation, est aujourd'hui multifonctionnelle et elle assure des opérations qui viennent, dans une certaine mesure, perturber son cycle et ralentir sa cadence.

Cette table peut en effet être utilisée pour façonner et aligner les couches adjacentes qui sont superposées sur la palette, laquelle opération est, par exemple, effectuée au moyen de taquets, ou presseurs, longitudinaux et transversaux disposés directement sur ladite table. Pour cette opération, qui prend un certain temps, la table commence par déposer la couche de caisses sur la palette, puis elle se décale verticalement vers le bas pour placer les différents presseurs à un niveau intermédiaire, entre deux couches, pour aligner les côtés de ces deux couches superposées.

Cette table peut aussi être mise en standby lorsque les couches de caisses ou autres, doivent être séparées par une feuille intercalaire. Cette opération de dépose de la feuille intercalaire, qui est effectuée par un équipement approprié associé au poste de palettisation, à pour effet de réduire la cadence de la table de palettisation.

Le document GB 1 129 944 décrit un palettiseur compact qui comporte un poste combiné de préparation des couches de caisses et de palettisation de ces couches, au fur et à mesure de leur préparation. La première couche est préparée sur une table escamotable avec des moyens de calibrage et des moyens d'ajustement de la position des caisses les unes par rapport aux autres.

Lorsque la couche est prête, la table de préparation s'escamote et la couche préparée, retenue par une butée transversale et, selon le cas, par la structure de calibrage, se pose directement sur la palette qui est en attente sous ladite table de préparation, ou se dépose sur la couche déposée précédemment sur ladite palette, laquelle palette est portée par une table élévatrice qui prend en charge la palette, le temps de la charger.

La table de préparation des couches est constituée de lattes et elle est montée sur des chaînes qui enveloppent la table élévatrice du poste de palettisation, et qui enveloppe la palette avec son chargement. Les chaînes comportent en fait deux tables constituées de lattes, lesquelles tables se relayent pour prendre en charge chaque couche de caisses et elles forment une sorte de noria autour de la table élévatrice qui porte la palette à charger.

La présente invention propose, pour une installation de palettisation du type de celle qui est décrite dans le document FR 2 897 341 précité, l'utilisation de moyens du type de ceux qui sont décrit dans le document GB 1 129 944 précité pour temporiser l'envoi des caisses au poste de palettisation, pendant le temps qui est nécessaire pour mener à bien toutes les opérations liées à ce poste de palettisation.

La présente invention permet d'améliorer le fonctionnement et les capacités de la table de palettisation sans modifier sa cadence qui est généralement de l'ordre de six opérations, en moyenne, par minute. Elle permet aussi de réduire les sollicitations de cette table de palettisation tout en améliorant son débit grâce à une préparation adéquate des caisses à palettiser.

De plus, le matériel utilisé, comme décrit dans le document FR 2 897 341 précité, permet une manipulation de caisses et de produits relativement fragiles.

La présente invention propose donc un palettiseur d'après la revendication 1.

Selon une disposition préférentielle de l'invention, le dispositif du poste de préparation et de préempilage de chaque couche de caisses comprend :
- des moyens pour préparer une première couche de caisses, pour la calibrer et pour la conserver temporairement au poste de préparation en la déplaçant, lesquels moyens sont constitués d'une table principale qui est mobile verticalement entre - une position haute pour accueillir les rangs de caisses en vue de former une couche de caisses et - une position basse qui se situe à une distance correspondant sensiblement à l'épaisseur de ladite couche de caisses, pour accueillir une autre couche de caisses, lesquels moyens de calibrage sont constitués de taquets latéraux et d'une butée transversale escamotable pour calibrer la couche de caisses au niveau dudit poste de préparation, ladite table principale étant constituée d'un tapis sans fin motorisé, lequel tapis est notamment utilisé pour mettre en mouvement les caisses et pour les resserrer contre la butée transversale de façon à calibrer, dans le sens longitudinal, ladite couche de caisses,
- des moyens de préparation et de calibrage d'une autre couche de caisses qui sont constitués d'au moins deux tables intérimaires susceptibles de prendre la place, à tour de rôle, de la table principale lorsque cette dernière est en position basse, lesquelles tables intérimaires sont mobiles horizontalement, dans le plan de circulation des caisses, guidées entre une position active d'occupation de la fenêtre laissée libre par ladite table principale, pour accueillir des groupes ou rangs de caisses et permettre la formation d'une nouvelle couche de caisses, et une position inactive qu'elles atteignent en s'escamotant et en se séparant de ladite nouvelle couche, cette dernière se déposant sur la couche qui est en attente sur ladite table principale, laquelle dépose s'effectuant automatiquement, par simple gravité, au fur et à mesure de l'escamotage de la table intérimaire qui est en fonction,
- un premier poussoir qui déplace les groupes ou rangs de caisses entre ledit poste de préparation des groupes ou rangs et le poste de préparation des couches,
- un second poussoir qui déplace la ou les couches de caisses entre ledit poste de préparation et ledit poste de palettisation.

Toujours selon l'invention, le dispositif de préparation et de préempilage des couches de caisses comprend deux tables intérimaires identiques qui sont constituées chacune d'un panneau souple confectionné avec les rouleaux de faible diamètre montés avec une roue libre, lesquelles tables intérimaires sont disposées de façon opposées l'une par rapport à l'autre, sur des chaînes sans fin, et l'ensemble forme une sorte de noria autour de la table principale, lesquelles chaînes sans fin sont positionnées latéralement, de part et d'autre du poste de préparation, guidées chacune dans un cadre qui s'étend autour de ladite table principale, et l'espace libre entre les deux tables intérimaires correspond au moins à la longueur de la surface d'accueil de ladite table principale pour pennettre le passage et la mise en place de cette dernière en position active pour accueillir un groupe de caisses, lesquelles chaînes sans fin étant animées d'un mouvement séquentiel d'avance dans un sens qui correspond au sens d'avancement des couches de caisses vers le poste de palettisation.

Selon une autre disposition de l'invention, les rouleaux de chaque table intérimaire, sont montés sur des paliers comportant une roue libre de façon à permettre l'entraînement des caisses lors du mouvement de ladite table et pour tasser ou resserrer lesdites caisses contre la butée transversale afin de calibrer automatiquement la couche de caisses, dans le sens longitudinal de circulation desdites caisses sur ladite table intérimaire, selon le schéma de palettisation, au fur et à mesure de l'escamotage desdits rouleaux lors de la dépose de cette couche de caisses sur la couche de caisses inférieure qui se situe sur la table principale.

Toujours selon l'invention, le palettiseur comporte des moyens pour calibrer chaque couche de caisses selon le schéma de palettisation, directement sur ladite table principale et, selon le cas, sur la table intérimaire, lesquels moyens sont constitués, d'une part, de la butée escamotable qui est disposée transversalement par rapport au sens de défilement des caisses sur le poste de préparation des couches de caisses et à l'extrémité aval dudit poste de préparation et, d'autre part, de taquets disposés latéralement, de chaque côté dudit poste de préparation des couches, laquelle butée transversale est aménagée et positionnée de telle façon qu'en position inactive elle fait office de sole pour réaliser la jonction entre la table principale et la table de dépose du poste de palettisation.

Selon une autre disposition de l'invention, la table principale comprend un bâti qui est porté par un berceau, lequel berceau s'étend transversalement au-delà des cadres de la noria, guidé verticalement sur des poteaux qui forment un châssis général sur lequel sont fixés lesdits cadres de la noria, et ce berceau est manoeuvré dans le sens vertical par l'intermédiaire d'un mécanisme intégré dans lesdits poteaux dudit châssis et, en particulier, un mécanisme constitué de chaînes qui sont disposées dans les poteaux latéraux du châssis, lesquelles chaînes sans fin sont entraînées par un servomoteur commun.

Ce dispositif de préparation et d'empilage de couches de caisses peut aussi, de façon préférentielle, se présenter sous la forme d'un module insérable entre le poste de préparation de groupes, ou rangs, de caisses et le poste de palettisation, lequel module comprend :
- une table principale qui est mobile verticalement depuis une position haute pour la préparation de la première couche de caisses jusqu'à une position basse, en attente d'une autre couche de caisses, laquelle table principale est constituée d'un tapis sans fin motorisé utilisé notamment pour mettre en mouvement les caisses et, en particulier, pour les resserrer de façon à calibrer la couche de caisses, dans le sens longitudinal de circulation desdites caisses,
- des moyens constitués de taquets latéraux et d'une butée transversale escamotable pour calibrer la couche de caisses,
- au moins deux tables intérimaires susceptibles de prendre, à tour de rôle, la place de ladite table principale lorsque cette dernière est en position basse avec une ou plusieurs couches de caisses, lesquelles tables intérimaires sont mobiles horizontalement, guidées entre une position active d'occupation de la fenêtre laissée libre par ladite table principale, pour accueillir les groupes ou rangs de caisses et permettre la formation d'une nouvelle couche de caisses, et une position inactive qu'elles atteignent en s'escamotant et en se séparant de ladite nouvelle couche, cette dernière se déposant sur la couche présente sur ladite table principale, laquelle dépose s'effectuant automatiquement, par simple gravité, au fur et à mesure de l'escamotage de la table intérimaire qui est en fonction.

Selon une disposition préférentielle de l'invention, le module de préparation et d'empilage de couches de caisses comprend une

Toujours selon l'invention, le module de préparation et d'empilage de couches de caisses comprend deux tables intérimaires identiques qui sont constituées chacune d'un panneau souple confectionné avec les rouleaux de faible diamètre montés sur roue libre, lesquelles tables sont montées de façon opposées l'une par rapport à l'autre sur des chaînes sans fin et l'ensemble forme une sorte de noria, lesquelles chaînes sans fin sont disposées latéralement, guidées dans un cadre qui s'étend autour de la table principale, et l'espace libre entre les deux panneaux correspond au moins à la longueur de la surface d'accueil de ladite table principale pour permettre le passage et la mise en place de cette dernière en position active pour accueillir des rangs de caisses, lesquelles chaînes sans fin étant animées d'un mouvement séquentiel d'avance dans un sens qui correspond au sens d'avancement des couches de caisses vers le poste de palettisation.

Selon une autre disposition de l'invention, les rouleaux de la table intérimaire sont montés sur des paliers comportant une roue libre de façon à mettre en mouvement les caisses et de les resserrer contre la butée transversale afin de calibrer automatiquement la couche de caisses selon le schéma de palettisation, au fur et à mesure de l'escamotage desdits rouleaux lors de la dépose de cette couche de caisses sur la couche de caisses qui se situe sur la table principale.

Toujours selon l'invention, le module de préparation et d'empilage de couches de caisses comporte aussi des moyens pour calibrer chaque couche de caisses selon le schéma de palettisation, lesquels moyens sont constitués, d'une part, d'une butée escamotable qui est disposée transversalement, à l'extrémité aval dudit module, d'autre part, de taquets disposés latéralement de chaque côté, laquelle butée transversale, en position inactive, fait office de sole pour réaliser la jonction entre la table principale et la table du poste de palettisation.

Selon une autre disposition de l'invention, la table principale comprend un bâti qui est porté par un berceau, lequel berceau s'étend transversalement au-delà des cadres de la noria, et il est guidé verticalement sur des poteaux qui font partie du châssis général sur lequel sont fixés lesdits cadres, et ce berceau est manoeuvré dans le sens vertical par l'intermédiaire d'un mécanisme qui est constitué de chaînes solidaires dudit berceau, lesquelles chaînes sont disposées dans les poteaux latéraux qui font partie du châssis et elles sont entraînées par un servomoteur commun.

L'invention concerne également le procédé de préempilage de ces couches de caisses d'après la revendication 7.

Selon une autre disposition de l'invention, le procédé de préempilage consiste à effectuer, simultanément, - le transfert des couches de caisses superposées vers le poste de palettisation et, - la mise en place de nouveaux rangs de caisses sur la table principale de formation de la couche initiale de caisses.

Toujours selon l'invention, le procédé de préempilage consiste, pour réaliser le calibrage de chaque couche de caisse :
- à stopper les caisses sur la butée transversale située à l'extrémité aval du dispositif ou du module de préparation et d'empilage pour resserrer longitudinalement lesdites caisses au moyen de chaque table de préparation des couches,
- à resserrer transversalement les caisses constituant chaque couche, au moyen de taquets latéraux bordant ledit dispositif de préparation des couches, lesquels taquets sont mobiles au-dessus de la table qui porte la couche correspondante et,
- à resserrer longitudinalement lesdites caisses par l'intermédiaire de la table correspondante, sous l'effet de l'adhérence entre les différentes caisses et ladite table correspondante, par un déplacement longitudinal de ladite table correspondante dans un sens allant de la table de préparation des rangs de caisses vers le poste de palettisation.

L'invention sera encore détaillée à l'aide de la description suivante et des dessins annexés, donnés à titre indicatif, et dans lesquels :
- la figure 1 est une vue schématique en plan d'une l'installation de palettisation qui comprend un poste équipé du dispositif de préparation et d'empilage selon l'invention ;
- la figure 2 est une vue en perspective schématique, et simplifiée, d'une installation de palettisation qui comprend le dispositif de préparation et d'empilage de couches de caisses avec le système en forme de noria qui comprend les tables intérimaires ;
- la figure 3 montre, toujours de façon schématique, la table principale de préparation et d'empilage de couches, en position active, après le transfert de la ou des couches de caisses ;
- la figure 4 est une vue schématique également montrant la table principale en position inactive et une table intérimaire, laquelle table intérimaire est formée d'un panneau souple constitué de rouleaux et elle est en position active pour accueillir un groupe de caisses en vue de la formation d'une couche ;
- la figure 5 montre, en coupe, l'une des extrémités d'un rouleau de la table intérimaire ;
- la figure 6 montre, en coupe également, l'autre extrémité d'un rouleau de la table intérimaire ;
- la figure 7 est une élévation du poste de préparation et d'empilage de couches de caisses, vu de côté ;
- la figure 8 est une élévation du châssis du poste de préparation et d'empilage, ledit châssis étant représenté sans la noria, et sans la table principale ;
- la figure 9 est une vue en plan montrant la disposition des différents organes de commande de la noria et du berceau de la table principale ;
- la figure 10 est une élévation du châssis du poste de préparation de couches, montrant le berceau de la table principale avec une portion de cette table principale ;
- la figure 11 est une élévation schématique partielle de la noria, vue de face ;
- la figure 12 est une élévation schématique, vu de face, d'un côté du châssis sur lequel a été monté en plus, le cadre de la noria, tel que représenté figure 11 ;
- la figure 13 est une vue en plan de l'un des taquets qui sont disposés latéralement, avec ses moyens de mise en oeuvre pour effectuer le resserrement des caisses dans le sens transversal ;
- la figure 14 montre, schématiquement, la butée transversale qui réalise le resserrement longitudinal des caisses, laquelle butée transversale est représentée en traits forts en position inactive de butée, faisant office de sole, et, en traits mixtes fins, en position active de butée ;
- les figures 15A à 15I montrent les différentes étapes du déroulement d'une opération de préparation et d'empilage de deux couches de caisses et de leur évacuation vers la table du poste de palettisation.

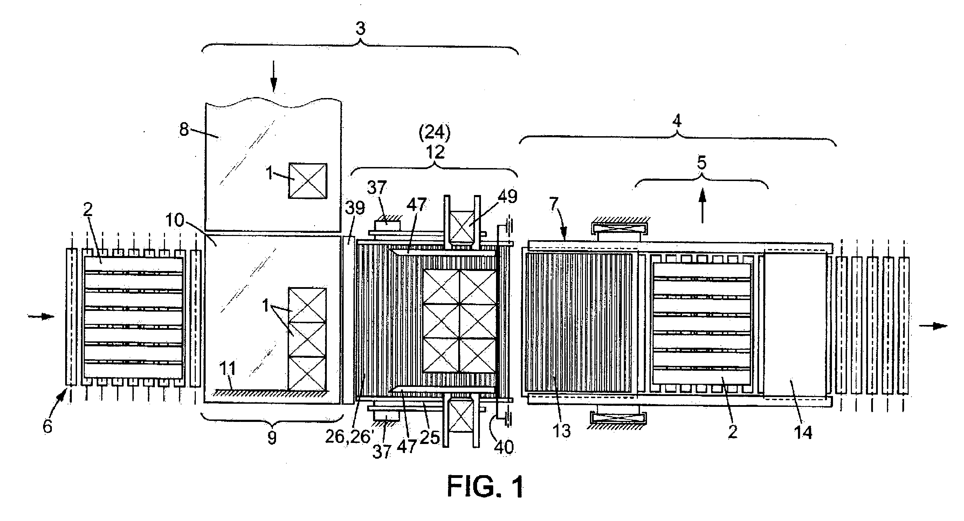

L'installation de palettisation représentée figure 1, s'apparente au palettiseur qui est décrit dans le document FR 2 897 341 précité. Cette installation, dénommée palettiseur, dans la suite du texte, peut notamment être utilisée pour empiler des couches de caisses 1 sur une palette 2 et, en particulier, des caisses 1 contenant des produits relativement fragiles, du genre bouteilles.

Ce palettiseur comprend :
- une zone repérée 3 qui constitue une zone préparatoire et au niveau de laquelle on trouve l'arrivée des caisses 1, puis leur regroupement sous forme de rangs de caisses et ensuite leur regroupement sous forme de couches de caisses 1,
- une zone repérée 4 qui constitue la zone de palettisation proprement dite et qui comprend un poste 5 de palettisation au niveau duquel la ou les couches de caisses 1 sont placées sur une palette 2,
- des aménagements pour la circulation des palettes vides et des palettes chargées.

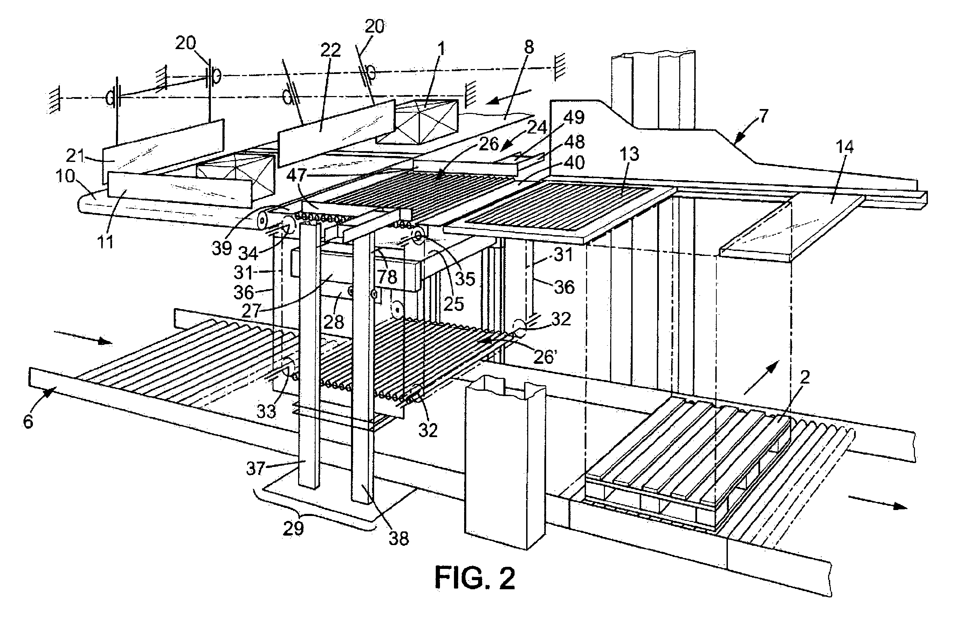

Les palettes 2 peuvent être amenées au poste 5 de palettisation de différentes façons. Dans l'exemple de réalisation représenté figures 1 et 2, les palettes 2 sont amenées à un niveau qui se situe sous le niveau de l'arrivée des caisses 1 et le niveau de la préparation des couches de caisses 1, c'est-à-dire sous le niveau de la zone 3 de préparation.

Les palettes 2 sont introduites dans le palettiseur par l'intermédiaire d'un convoyeur 6 qui se situe au niveau du sol. La zone 3 préparatoire se situe au-dessus du convoyeur 6 d'amenée des palettes 2, de même que la table 7 de dépose et de palettisation, laquelle table 7, dénommée parfois tablier, est mobile verticalement pour déposer la ou les couches de caisses 1 sur la palette 2, au niveau du poste 5 de palettisation.

Les caisses 1 sont introduites dans la zone préparatoire 3 du palettiseur par un convoyeur 8 d'amenée sur lequel elles sont orientées avant d'arriver au poste 9 de préparation où elles sont regroupées sur une table 10 sous forme de groupe(s) de caisses 1 ou sous forme d'un ou de plusieurs rangs, lesquels rangs sont disposés transversalement par rapport au sens de circulation ultérieur des caisses 1 vers le poste 5 de palettisation.

Les caisses 1 sont regroupées sur la table 10 de préparation au moyen d'une butée 11 qui est fixe à l'extrémité aval de ladite table 10.

Les groupes ou rangs de caisses 1 sont ensuite déplacés vers le poste 12 de préparation des couches de caisses. Au niveau de ce poste 12 de préparation des couches, les caisses 1 constituant chaque couche de caisses 1 sont resserrées, comme détaillé plus loin, de façon à préparer une couche qui est calibrée selon le format de la palette 2 et selon le schéma de répartition desdites caisses sur cette dernière.

En temps normal, c'est-à-dire en dehors des opérations de changement de palettes ou autres, chaque couche de caisses 1 peut être transférée directement du poste 12 de préparation de la couche vers la table 7 de palettisation qui effectue au fur et à mesure, la dépose de ces différentes couches sur la palette 2, laquelle table 7, du type à ouverture symétrique, comporte un premier panneau 13 qui, avec des moyens appropriés, transfère une moitié de la couche sur un second panneau 14 et ladite couche est déposée sur la palette 2 comme détaillé dans le document FR 2 897 341 précité, par escamotage desdits panneaux 13 et 14.

Le transfert des groupes ou rangs de caisses 1 puis des couches de caisses d'un poste à l'autre s'effectue aussi au moyen de poussoirs 20, comme dans le document rappelé ci-dessus.

Ces poussoirs 20 sont représentés schématiquement figure 2. Un premier poussoir 20, muni d'un plateau 21, permet le transfert des groupes ou rangs de caisses 1 vers le poste 12 de préparation de couches et un second poussoir 20, muni d'un plateau 22, est utilisé pour transférer la couche de caisses 1 vers la table 7 de palettisation et en particulier pour la pousser sur le grand panneau 13 escamotable de cette table 7.

Tous ces éléments sont décrits dans le document FR 2 897 341 précité pour palettiser des couches successives de caisses 1 en déposant ces différentes couches sur la palette 2.

Comme indiqué précédemment, le temps de préparation d'une couche de caisses 1 est nettement inférieur au temps qui est nécessaire pour évacuer la palette 2 qui est pleine et pour amener une nouvelle palette 2 au poste 5 de palettisation.

Aussi, pour masquer le temps qui correspond aux opérations qui se déroulent au poste 5 de palettisation, comme le changement de palettes, la pose d'intercalaires ou encore l'alignement vertical, ou taquage des couches, le poste 12 de préparation des couches de caisses est aménagé pour préparer des couches de caisses 1 qu'il conserve de façon à temporiser le déplacement de ces couches de caisses 1 vers ledit poste 5 de palettisation.

Ce poste 12 de préparation des couches de caisses comprend un dispositif 24 de préparation et d'empilage de couches de caisses 1, lequel dispositif 24 est aménagé pour effectuer une sorte de stockage temporaire desdites caisses 1 en empilant plusieurs couches de caisses 1 les unes sur les autres, deux ou plus selon les besoins, et cette opération de formation de couches de caisses et d'empilage de ces couches de caisses est prévue pour durer suffisamment longtemps afin de couvrir le temps nécessaire aux diverses opérations qui se déroulent au poste 5 de palettisation.

Pour réaliser cette opération de préparation de couches de caisses 1 et d'empilage d'au moins deux couches, le dispositif tampon 24 comporte au moins deux tables qui accueillent, à tour de rôle, les groupes ou rangs de caisses 1 pour former une couche de caisses 1.

Dans le mode de réalisation représenté schématiquement sur les différentes figures, le dispositif tampon 24 comprend une table principale 25 qui est aménagée pour réaliser une superposition de deux couches de caisses 1 ; ce dispositif 24 peut toutefois, sans dénaturer l'invention, être aménagé de façon à permettre la superposition de plus de deux couches de caisses en fonction des cadences et du temps nécessaire pour mener à bien les diverses opérations qui se déroulent au poste 5 de palettisation.

La figure 2 montre l'aménagement du dispositif tampon 24 qui est représenté avec plusieurs tables : la table 25 principale et une autre table 26 ; la table 25 principale est en position escamotée sous la table 26 ; en fait cette table 26 a pris la place de la table 25 principale ; une autre table 26', détaillée plus loin, est positionnée sous la table 25 principale.

Pour un fonctionnement sans nécessité d'empilage, c'est-à-dire lors de la mise en place des couches les unes à la suite des autres sur la palette 2, c'est la table 25 qui assure la préparation des couches et qui assure la continuité entre la table 10 de préparation des groupes ou rangs de caisses 1 et le poste 5 de palettisation.

En dehors des périodes de rétention des couches de caisses 1, cette table 25 est utilisée comme table principale pour former chaque couche de caisses 1 qui, une fois préparée, est tout simplement transférée vers le poste 5 de palettisation, sur la table 7 de dépose, pour garnir la palette 2 qui se situe audit poste 5 de palettisation, comme détaillé dans le document précité.

Les secondes tables 26, 26' de préparation de couche sont utilisées lors du déroulement des diverses opérations à mener au poste 5 de palettisation. Ces secondes tables 26, 26', intérimaires de préparation fonctionnent lorsqu'il est nécessaire de temporiser l'envoi des caisses 1 vers le poste 5 de palettisation ; les différentes couches préparées par l'intermédiaire de ces tables 26, 26' intérimaires sont maintenues au niveau du poste 12 de préparation de ces couches, et elles sont empilées les unes sur les autres et toutes calibrées selon le schéma de palettisation ; elles se substituent, à tour de rôle, à la table 25 principale.

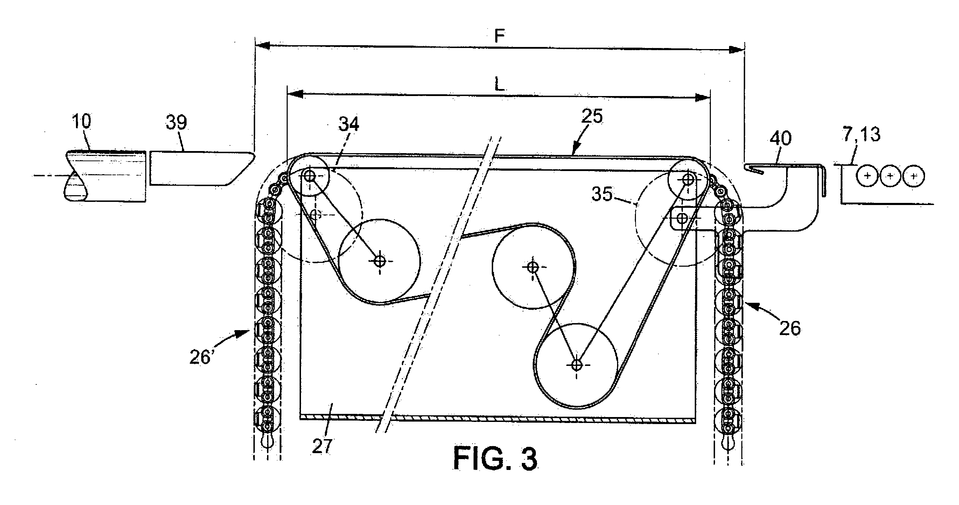

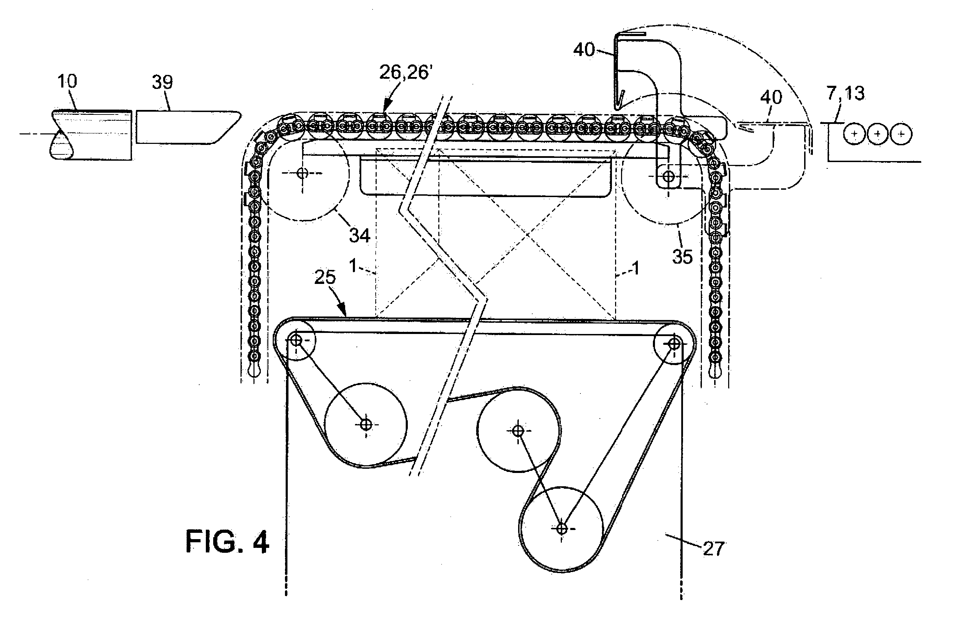

Sur la figure 2, la table 25 principale de préparation des couches de caisses 1 est positionnée sous le niveau de la table 26 intérimaire. Cette table 25 principale apparaît également figure 3, mais en position haute, pour la préparation d'une couche de caisses et elle apparaît en figure 4, comme figure 2, mais en position basse, c'est-à-dire dans une position où, normalement, elle porte une couche de caisses 1, comme représentée en traits mixtes fins.

La table 26 intérimaire qui apparaît figure 2 et figure 4 est en fonction ; elle est en position active pour permettre la préparation d'une couche supplémentaire ; elle prend la place de la table 25 principale lorsque cette dernière est en stand by, c'est-à-dire lorsqu'elle ne peut livrer la couche de caisses 1 qu'elle a préparée et qu'elle est, dans ce cas, escamotée en position basse.

Ces tables 25, 26 et 26' assurent une continuité entre la table 10 de préparation des groupes ou rangs de caisses et le panneau 13 de la table 7 de palettisation qui reçoit la couche de caisses 1 préparée en vue de sa palettisation.

La table 25 principale est constituée, comme dans le brevet FR 2 897 341 précité, d'un tablier en forme de tapis sans fin qui est motorisé par un motoréducteur et, comme détaillé dans ce brevet, le mouvement de ce tapis est coordonné avec celui du plateau 22 du poussoir 20.

Le tapis de la table 25 est guidé dans un bâti 27 qui est lui-même porté par un berceau 28 disposé transversalement par rapport au sens d'avancement dudit tapis de la table 25. Ce berceau 28 est mobile verticalement, guidé dans un châssis 29 général et il est manoeuvré par un mécanisme qui sera détaillé plus loin.

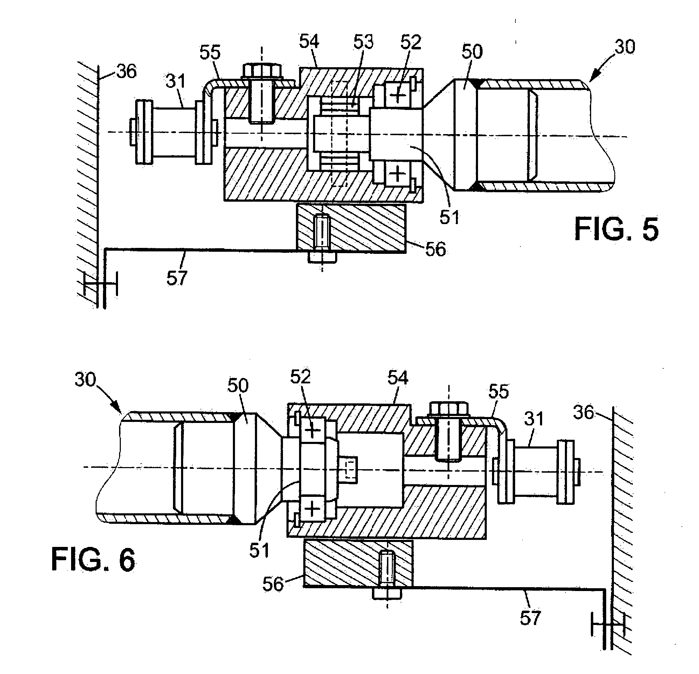

La table 26 et la table 26', toutes deux intérimaires, se présentent sous la forme de panneaux souples. Ces panneaux sont constitués de rouleaux 30 de faible diamètre, comme représentés figures 5 et 6. Ces rouleaux 30 sont portés, à leurs extrémités, par des chaînes 31 sans fin, qui circulent dans des plans parallèles et verticaux disposés en bordure du poste 12 de préparation des couches.

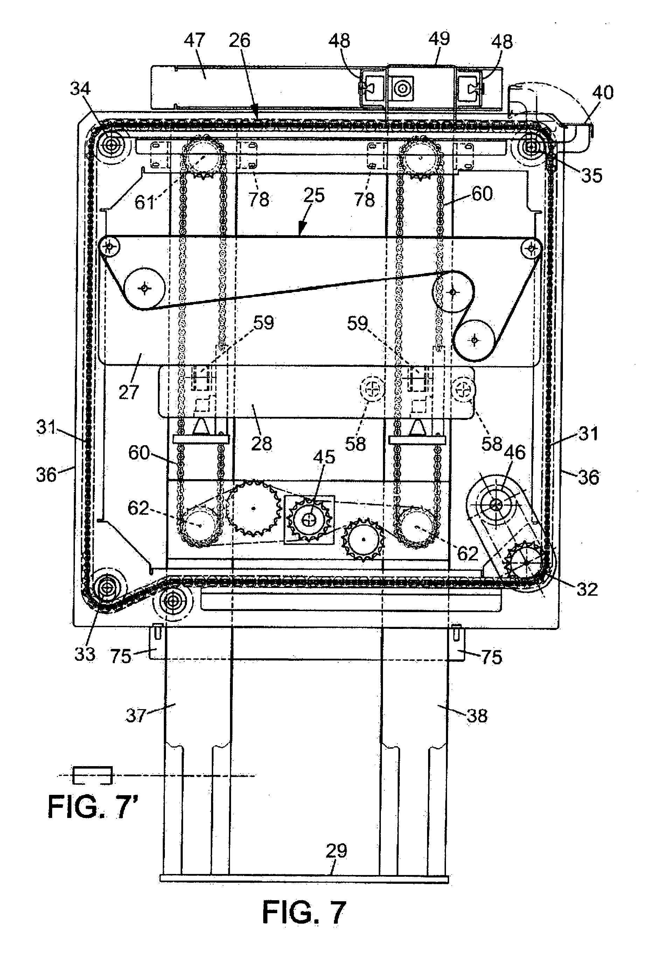

Chaque chaînes 31 est tendue sur des poulies repérées de 32 à 35 ; lesquelles poulies sont positionnées au niveau des angles d'un cadre 36 qui est solidaire du châssis 29 général et, plus particulièrement, des poteaux 37 et 38 qui forment, de chaque côté du poste 12, la structure de ce châssis 29. Chaque cadre 36 est aménagé pour guider une chaîne 31 autour de la table 25 principale, comme représenté également figure 7.

La table 25 a une longueur L qui est voisine de la distance qui sépare la table 10 de préparation des rangs et la table 7 de palettisation et, plus particulièrement, de la dimension F de la fenêtre qui s'étend entre les soles 39 et 40, lesquelles soles 39 et 40 font, respectivement, la jonction entre, d'un côté, ladite table 10 et la table 25 principale et, de l'autre côté, en aval, ladite table 25 et le panneau 13 de la table 7 de palettisation.

Lorsque, comme représenté figure 4, c'est la table 26, ou 26', intérimaire qui fait la jonction entre la table 10 et le panneau 13 de la table 7 de palettisation, la longueur de cette table 26 intérimaire, constituée des rouleaux 30, correspond sensiblement à la longueur L de la surface de la table 25 principale, voisine également de la distance F qui sépare les soles 39 et 40.

Ces tables 25 et 26, 26', sont mobiles, comme détaillées plus loin, dans le sens de déplacement des caisses 1, c'est-à-dire dans un sens allant de la table 10 de préparation des groupes ou rangs de caisses vers la table 7 de palettisation pour réaliser un resserrement longitudinal desdites caisses 1 qui constituent une couche, contre une butée qui correspond à la sole 40 comme détaillée plus loin.

Le berceau 28 de la table 25 principale est animé d'un mouvement de monte et baisse séquentiel, au moyen d'un servomoteur 45 qui permet de contrôler et de gérer ce mouvement ascensionnel entre une position haute de préparation de la couche de caisses et une ou plusieurs positions basses d'attente et d'accueil d'une ou plusieurs couches complémentaires de caisses 1.

Les tables 26, 26', sont mobiles, manoeuvrées par l'intermédiaire des chaînes 31 au moyen d'un organe moteur du type motoréducteur 46 ; ces tables 26 et 26' tournent autour de la table 25 principale. De plus, comme détaillé ci-après, le mouvement des tables 26, 26' permet également de resserrer les caisses 1 dans le sens longitudinal lors de la préparation d'une couche ; cette couche est en fait calibrée, comme détaillée également ci-après, avant d'être déposée sur la couche qui est en attente sur la table 25 principale.

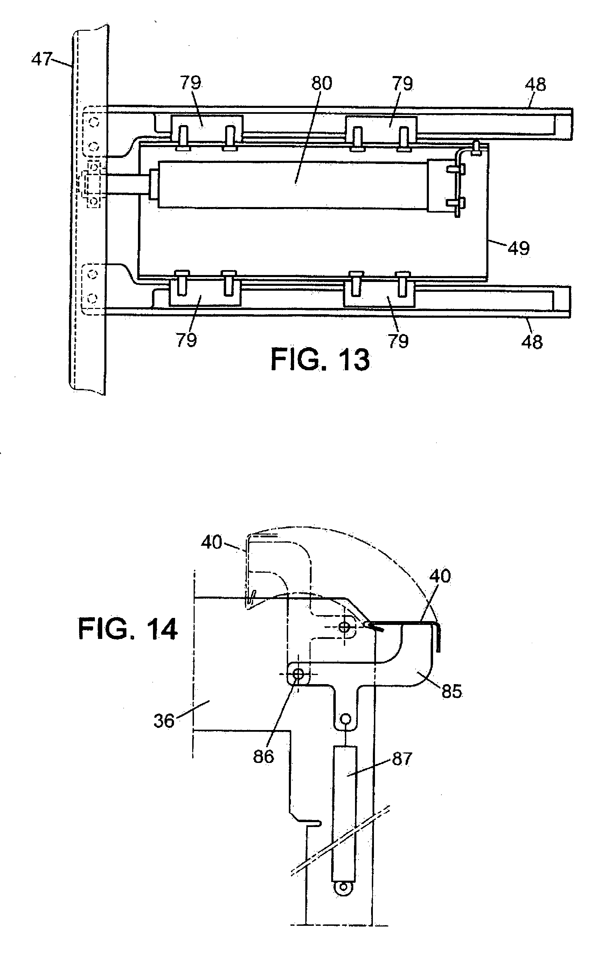

Le resserrement longitudinal des caisses 1 de chaque couche est réalisé en coopération et au moyen d'une butée qui s'étend transversalement par rapport au sens d'avancement desdites caisses 1 vers le poste 5 de palettisation. Cette butée 40 transversale correspond en fait à la sole 40 et elle remplit une double fonction : elle constitue en effet la sole 40, comme détaillé auparavant, pour faire la jonction entre la table 25 principale et le panneau 13 de la table 7 de palettisation et elle joue ce rôle de butée transversale, repérée 40 également, pour effectuer le resserrement longitudinal de la couche de caisses 1. Cette sole ou butée 40 sera détaillée plus loin en liaison avec la figure 14.

Cette sole ou butée 40 permet donc le calibrage longitudinal de la couche de caisses 1 grâce au mouvement d'avancement des groupes ou rangs de caisses 1, lorsque cette couche est portée par la table 25 principale ou, selon le cas, par la table 26 ou 26' intérimaire ; toutes ces tables 25, 26 et 26' sont mobiles avec une vitesse choisie pour réaliser un calibrage longitudinal en douceur.

Le calibrage transversal de chaque couche de caisses 1 est réalisé au moyen de taquets 47 situés de part et d'autre du poste 12 de préparation des couches, au-dessus du niveau de la table 25 et de la table 26, 26' selon le cas. Ces taquets 47 latéraux sont portés par un système de coulisseaux 48 qui coopèrent avec des glissières disposées sur un caisson 49 dont le détail sera donné plus loin en liaison avec la figure 13.

Compte tenu du mouvement de la table 26 intérimaire et de son implantation sur des chaînes 31 qui tournent autour de la table 25 principale, lesdites chaînes 31 portent, comme indiqué précédemment, deux tables 26 et 26' qui sont opposées, séparées l'une de l'autre d'une distance qui correspond au moins à la longueur F de la fenêtre qui s'étend entre les soles 39 et 40.

Sur la figure 2, les deux tables 26 et 26' sont représentées en opposition ; la table 26 est en position active pour accueillir des groupes ou rangs de caisses 1 et la table 26' est en position inactive sous la table 25 principale, mais au-dessus du convoyeur 6 sur lequel circulent les palettes 2. Ces deux tables 26 et 26' forment, avec les chaînes 31, une sorte de noria qui tourne dans un sens bien précis, lequel sens correspond, lorsqu'elles sont en position active d'accueil d'un groupe de caisses 1, au sens d'avancement de ce groupe de caisses et au sens d'avancement ultérieur de la ou des couches de caisses 1 vers le poste 5 de palettisation.

Pour effectuer l'entraînement des caisses 1 et exercer une pression sur ces dernières, lorsqu'elles sont en appui sur la butée 40, comme représenté figure 4, les rouleaux 30 des tables 26, 26' sont montés sur les chaînes 31 avec au moins une roue libre, comme montrés figure 5.

Chaque rouleau 30 est constitué d'un tube de faible diamètre, de l'ordre de 30 mm, et ce tube comporte, à chacune de ses extrémités, un embout 50 soudé, par exemple ; chaque embout 50 comporte un tourillon 51 enfilé dans un roulement 52 et, d'un côté, le tourillon 51 est prolongé pour coopérer avec une roue libre 53.

Les roulements 52 sont chacun logés dans une douille 54 qui fait office de support, laquelle douille 54 est solidaire, au moyen d'une équerre 55, d'un maillon de la chaîne 31, et ceci de chaque côté du poste 12 de préparation des couches de caisses 1. L'une des douilles 54 renferme, en plus du roulement 52, la roue libre 53 et l'autre douille 54 est aménagée pour immobiliser le rouleau en translation par l'intermédiaire du roulement 52 correspondant qui est solidaire de l'embout 50.

Les douilles 54 qui portent les extrémités des rouleaux 30 sont guidées, de chaque côté, sur un patin 56 longitudinal qui s'étend entre les poulies 34 et 35 supérieures, lequel patin 56 est porté par une équerre 57 qui est solidaire du cadre 36 correspondant. Ces patins 56, réalisés en matériau résistant et à faible coefficient de frottement, supportent le poids de la couche de caisses 1 lorsqu'elle est en préparation sur l'une des tables 26, 26' intérimaires.

Le berceau 28 de la table 25 principale est guidé sur chaque couple de poteaux 37, 38, et il est mobile verticalement au moyen d'un mécanisme de manoeuvre qui comprend un système de levage par chaînes, aménagé dans chacun desdits poteaux 37, 38 dont la section est en forme de U avec des rebords.

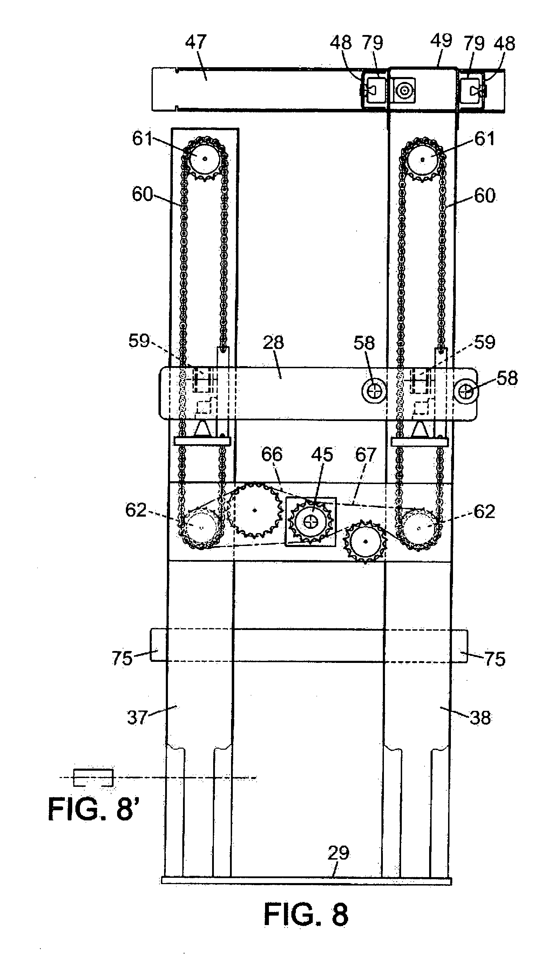

La figure 8 représente un couple de poteaux 37, 38 et les moyens de manoeuvre qui permettent de déplacer le berceau 28, verticalement, entre plusieurs positions, selon le nombre de couches de caisses 1 qui sont susceptibles d'être déposées sur la table 25 principale.

Le berceau 28 est guidé, par exemple, sur le poteau 38 au moyen de galets 58 disposés latéralement et il est également guidé sur le fond de chaque poteau 37, 38, au moyen des galets 59, respectivement.

Le déplacement vertical du berceau 28 est réalisé au moyen de chaînes 60 qui sont respectivement fixées sur ledit berceau 28 et qui sont tendues entre des poulies : des poulies 61 et 62 disposées respectivement en haut et vers le bas des poteaux 37 et 38.

Ces deux chaînes 60 sont mobiles sous l'effet du servomoteur 45 dont il a été question auparavant, lequel servomoteur 45 entraîne, au moyen de courroies ou chaînes 66 et 67, lesdites chaînes 60 pour faire monter ou descendre le berceau 28 qui porte la table 25 principale.

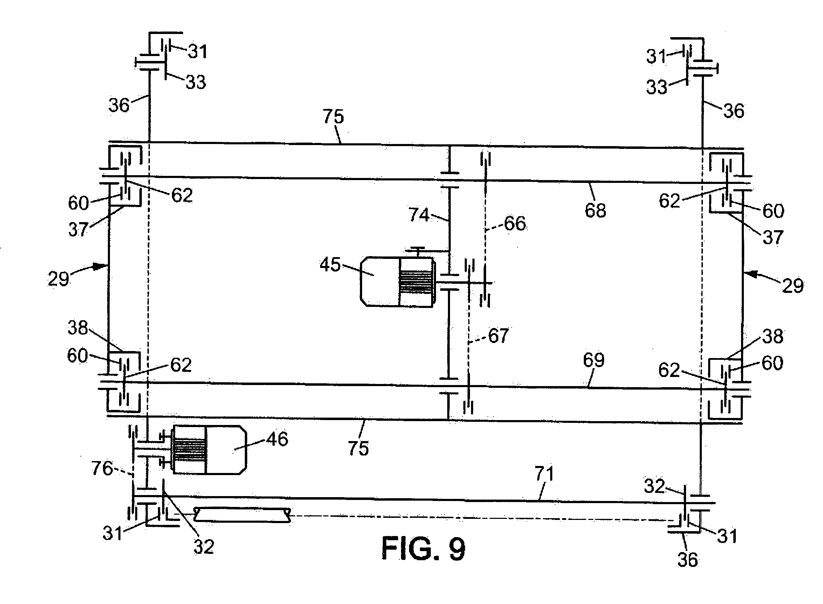

La figure 9 montre l'implantation des systèmes de motorisation pour le berceau 28 et en particulier pour les chaînes 60 qui sont solidaires de ce berceau 28. On retrouve le servomoteur 45 qui entraîne, par l'intermédiaire des courroies ou chaînes 66 et 67, des arbres 68 et 69 sur les extrémités desquels sont installées les poulies 62 d'entraînement des chaînes 60.

Toujours sur cette figure 9, on retrouve le motoréducteur 46 qui entraîne les chaînes 31 de la noria sur lesquelles sont positionnés les rouleaux 30 qui forment les tables 26 et 26' intérimaires. Un arbre 71 s'étend entre les chaînes 31 qui sont situées de chaque côté du poste 12 de préparation des couches de caisses 1, lequel arbre 71 porte les poulies 32 d'entrainement desdites chaînes 31 et il est guidé dans des paliers disposés à la partie inférieure des cadres 36 qui forment, avec le châssis 29, la structure de la noria.

Le servomoteur 45 est porté par un bâti 74 disposé dans la partie centrale du poste 12 au niveau de la partie inférieure des cadres 36. Ce bâti 74 repose sur des traverses 75 qui relient les poteaux 37, d'une part, et les poteaux 38, d'autre part.

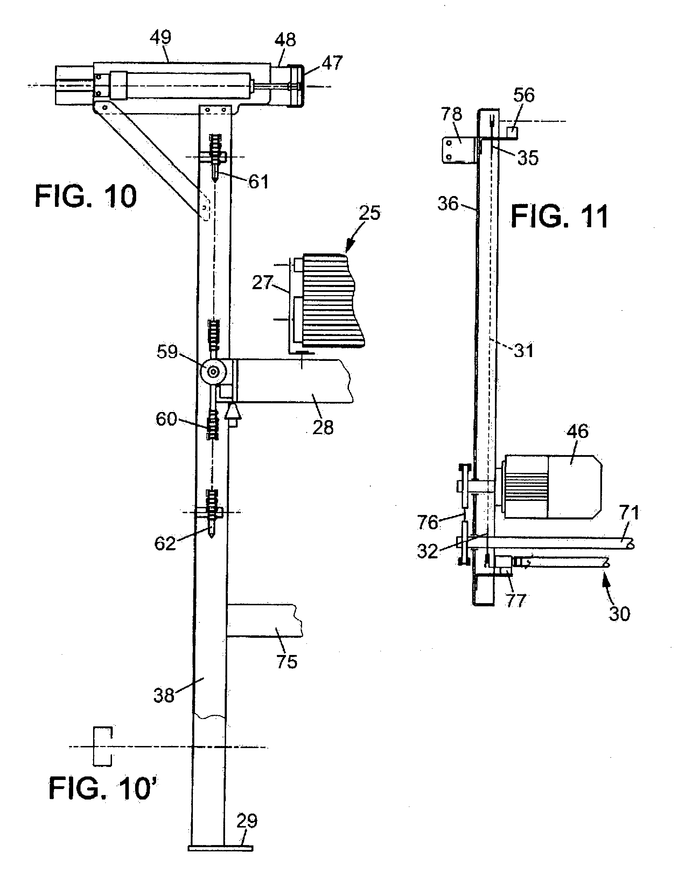

La figure 10 est une vue de face partielle du châssis 29, lequel châssis 29 porte et guide le berceau 28 sur lequel est posé le bâti 27 de la table 25 principale. Le berceau 28 est manoeuvré de chaque côté par les chaînes 60 qui s'étendent depuis la partie supérieure des poteaux 37, 38, jusqu'à un niveau qui se situe sensiblement au-dessus du niveau des traverses 75 qui s'étendent entre les couples de poteaux 37, 38 et qui forment également la structure du châssis 29.

Sur la figure 10, on retrouve le berceau 28 qui porte le bâti 27 de la table principale 25. Ce berceau 28 est guidé sur le châssis 29 et en particulier sur le fond des poteaux 37, 38, au moyen des galets 59 et il est manoeuvré de chaque côté par l'intermédiaire des chaînes 60, comme détaillé auparavant.

A la partie supérieure du poteau 38, on retrouve le taquet 47 latéral qui est porté par le caisson 49 et les coulisseaux 48 ; le caisson 49 est fixé à la partie supérieure du poteau 38 et l'ensemble sera détaillé plus loin en liaison avec la figure 13.

La figure 11 montre, de façon partielle, en vue de face, un cadre 36 de la noria, disposé en vis-à-vis du châssis 29 et des poteaux 37 et 38 de la figure 10.

Sur cette figure 11, on retrouve le servomoteur 46 qui entraîne l'arbre 71 par l'intermédiaire d'une courroie ou chaîne 76. On remarque également, sur cette figure 11, le patin 56 qui est disposé à la partie supérieure du cadre 36 pour guider et soutenir les douilles 54 des rouleaux 30. Un patin 77 est également disposé à la partie inférieure du cadre 36, pour guider et soutenir les rouleaux 30 qui constituent les tables 26, 26' intérimaires, lorsqu'elles sont en position inactive, à la partie inférieure dudit cadre 36, sous la table principale 25 et au-dessus du convoyeur 6 qui livre les palettes 2 au poste 5 de palettisation.

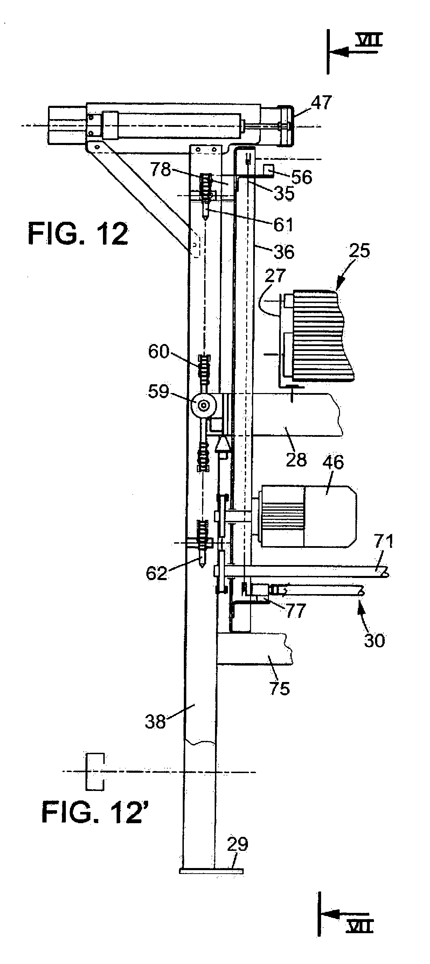

La figure 12 représente, de façon partielle et de face, le châssis 29 avec le cadre 36 de la noria en position normale, installé sur ce châssis 29. Ce cadre 36 repose, à sa partie inférieure, sur les traverses 75 qui sont fixées sur les poteaux 37 et 38 constituant le bâti 29 et il comporte, à sa partie supérieure, des pattes 78, en forme d'équerres, qui permettent de le fixer sur la partie supérieure desdits poteaux 37 et 38.

Ce châssis 29 forme, vu de face, une sorte de U ouvert à sa partie supérieure, laquelle partie supérieure comporte, sur chacun des poteaux 38, les taquets latéraux 47 qui permettent de resserrer les caisses 1 et de calibrer la couche dans le sens transversal pour la faire correspondre au schéma de palettisation et en particulier au périmètre de la palette 2, par exemple. Ces taquets 47 sont portés, comme représentés figure 13, par une paire de coulisseaux 48 qui coopèrent avec des glissières 79 aménagées latéralement sur le caisson 49, lequel caisson 49 est fixé à la partie supérieure de chacun des poteaux 38, c'est-à-dire des poteaux qui se situent du côté du poste 5 de palettisation.

Un vérin 80 est interposé entre le caisson 49 et le taquet 47 pour déplacer ce dernier transversalement par rapport au sens d'avancement des caisses 1 sur la table 25 ou la table 26, 26' selon le cas, au niveau du poste 12 de préparation et d'empilage des couches de caisses 1.

Ces taquets 47 se situent sensiblement en retrait de la butée 40 qui fait également office de sole. Cette butée 40, représentée figure 14, s'étend sur toute la largeur du poste 12, en aval des taquets 47 ; elle est articulée sur le cadre 36 de la noria et elle est portée, de chaque côté, par une sorte de bras 85 en forme d'équerre. Ce bras 85 est mobile autour d'un axe 86 qui correspond, par exemple, à l'axe de la poulie 34 de la chaîne 31, sur chaque cadre 36 de la noria, lequel bras 85 est manoeuvré au moyen d'un vérin 87 pour faire passer la butée de sa position active de butée 40 à sa position active de sole 40, selon le cas, et inversement.

La butée 40 a également un rôle de sécurité lors du transfert des caisses 1 lorsqu'elles sont poussées par le plateau 22 du poussoir 20 ; en effet, lorsque les caisses 1 sont mises en place par le plateau 22, notamment sur la table 26, 26' intérimaire, ces caisses 1 sont portées par les rouleaux 30 qui sont libres en rotation dans le sens qui correspond à l'avancement desdites caisses 1 vers la table 7 de palettisation. La butée 40 peut donc arrêter les caisses 1 qui seraient tentées de poursuivre leur chemin et d'aller au-delà de la table 26, 26' intérimaire.

Le dispositif 24 de préparation et d'empilage de couches de caisses 1 se présente aussi sous la forme d'un module insérable dans une installation de palettisation dès lors que cette installation exige un stockage temporaire des caisses 1 en empilant plusieurs couches de caisses 1 les unes sur les autres, deux ou plus selon les besoins, afin de couvrir le temps nécessaire aux diverses opérations qui se déroulent au poste 5 de palettisation.

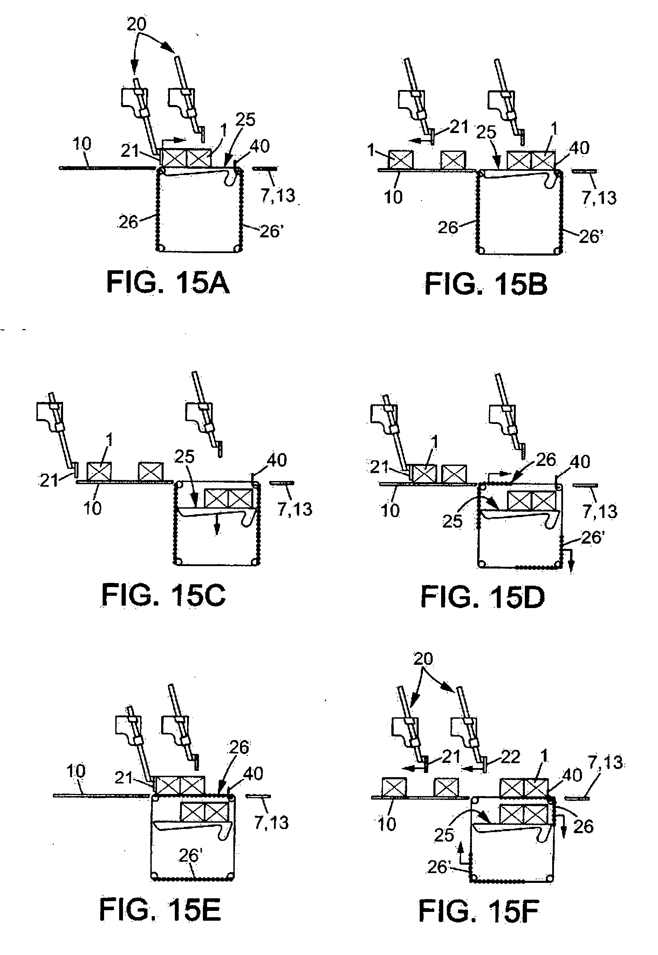

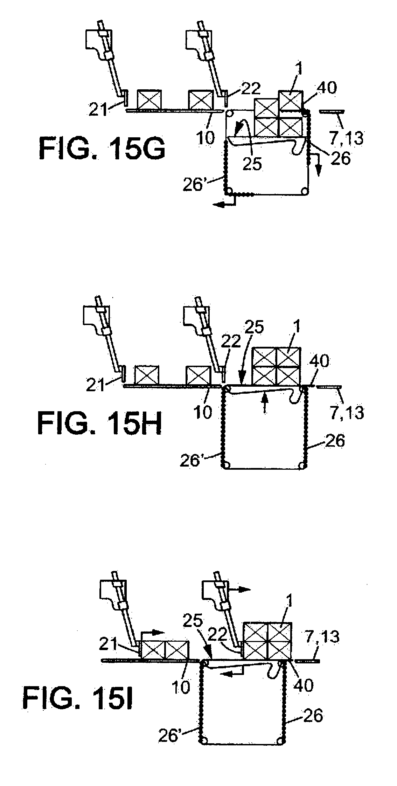

Les figures 15 illustrent de A à I, de façon schématique, les différentes étapes qui permettent de réaliser un empilage de couches de caisses 1 au niveau du poste 12 de préparation des couches, pour absorber le temps mort qui découle des différentes opérations menées au poste 5 de palettisation.

La figure 15A montre une paire de rangées de caisses 1, poussées par le plateau 21 du poussoir 20, depuis la table 10 du poste 9 de préparation des rangs de caisses 1 jusque sur la table 25 principale qui est en position haute, c'est-à-dire en position active pour la préparation d'une couche de caisses 1.

Sur cette figure 15A, on remarque la présence de la butée 40 transversale qui est en position active de butée. La table 26 intérimaire et la table 26' de la noria sont toutes deux en position inactive, formant des parois verticales de part et d'autre et sous le niveau de la table principale 25.

La figure 15B montre l'intervention de la table 25 principale et en particulier son mouvement d'avancement qui permet, en collaboration avec la butée 40, de regrouper les rangs de caisses 14 et de calibrer, dans le sens longitudinal, la couche de caisses 1 sur ladite butée 40. Pendant cette opération de calibrage longitudinal, et de calibrage transversal au moyen des taquets 47 qui ne sont pas représentés sur cette figure, le plateau 21 retourne en position de départ pour prendre en charge les nouveaux groupes ou rangs de caisses 1 qui sont formés sur la table 10 de préparation.

La figure 15C montre le déplacement vertical de la table 25 principale depuis sa position haute pour la préparation de la couche jusqu'à sa position basse, en attente de recevoir une autre couche de caisses 1.

Toujours sur cette figure 15C, on remarque que le plateau 21 est en position pour prendre en charge des rangs de caisses 1 en vue de les amener au niveau du poste 12 de préparation d'une nouvelle couche de caisses 1.

Sur la figure 15D, on remarque la mise en place de la table 26 intérimaire qui vient combler la fenêtre laissée vide par la table 25 principale. Dans le même temps, le plateau 21 prend en charge les nouveaux rangs de caisses 1 et, comme représenté figure 15E, il les positionne sur la table 26 intérimaire qui est positionnée dans l'espace laissé libre par la table 25 principale.

Les rangs de caisses 1 posés sur la table 26 intérimaire avancent vers la butée 40 sous l'effet du déplacement de cette table 26 qui est, rappelons le, constituée de rouleaux 30 montés avec une roue libre 53. Dans son mouvement, la table 26 intérimaire entraîne les caisses 1 et elle resserre ces caisses 1 sur la butée 40 et, au fur et à mesure de son déplacement, comme représenté figure 15G, cette table 26 intérimaire abandonne la couche de caisses 1, laquelle couche se positionne, par simple gravité, sur la couche précédente qui est portée par la table 25 principale.

On remarque, figure 15F, que, pendant la préparation de la seconde couche de caisses 1 et pendant sa dépose sur la couche précédente, le plateau 22 du poussoir 20 s'est déplacé pour se mettre en position active de prise en charge des deux couches de caisses 1 qui viennent d'être préparées et qui sont superposées sur la table 25 principale.

Figure 15H, cette table 25 principale est passée de sa position basse à sa position haute normale, c'est-à-dire au niveau de la table 10 et de la table 7 de palettisation. Pour éviter un accostage trop violent entre le plateau 22 et la couche de caisses 1, on remarque, figure 15I, que la table 25 principale est également mise en mouvement, comme détaillé d'ailleurs dans le document FR 2 897 341 précité, afin de commencer le déplacement des caisses vers la table 7 de palettisation et de mettre en mouvement ces couches de caisses 1 pour éviter un accostage trop violent entre le plateau 22 et l'ensemble de ces caisses 1 qui représente une masse en mouvement parfois importante. C'est le plateau 22 qui amène la couche en position optimale sur le panneau 13 de la table 7 de palettisation. Pendant cette évacuation des différentes couches de caisses 1, on remarque, toujours figure 15I, que le plateau 21 a pris en charge des nouveaux rangs de caisses 1 pour les amener, sans perte de temps, sur la table 25 principale qui recommence son cycle.

Pour pouvoir évacuer les couches de caisses 1 qui ont été préparées sur la table 25 principale, comme représentées figure 15H, la butée 40 passe de sa position active de butée à la position active de sole 40 pour faire la jonction entre la table 25 principale et le panneau 13 de la table 7 de palettisation. Cette position de la sole 40 est maintenue durant tout le temps du transfert des couches de caisses 1, comme représenté figure 15I. La butée 40 se repositionne immédiatement après l'évacuation complète des couches de caisses 1, pour permettre le calibrage des rangs de caisses amenés par le plateau 21 et former une nouvelle couche de caisses 1 sur la table 25 principale. Selon les besoins, la table 25 principale peut recevoir plusieurs couches de caisses qui s'empilent les unes sur les autres en attendant d'être transférées sur la table 7 de palettisation.

Le procédé de préempilage de plusieurs couches de caisses 1, pour temporiser l'opération de palettisation de ces différentes couches, consiste donc :
- à préparer une couche de caisses sur la table 25 principale à partir d'un groupe de caisses 1 préalablement formés ;
- à calibrer cette couche de caisses selon le schéma de palettisation et à la mettre au format de la palette 2 d'accueil, sur la dite table 25 principale ;
- à escamoter verticalement ladite table 25 principale, d'une hauteur sensiblement supérieure à l'épaisseur de la couche de caisses 1 ;
- à installer une table 26, 26', intérimaire dans l'espace laissé libre par ladite table 25 principale.
- à amener un nouveau groupe de caisses 1, sur ladite table 26, 26', intérimaire et à le calibrer de la même façon que la couche précédente et à la verticale de cette couche précédente ;
- à escamoter ladite table 26, 26', intérimaire en maintenant cadrée la couche de caisses 1 correspondante pour la déposer directement sur la couche précédente qui est disposée sur ladite table 25 principale ;
- à ramener, si la nécessité de temporiser est terminée, la table 25 principale au niveau de la table 7 de palettisation, avec ses différentes couches de caisses 1 superposées ; et,
- à transférer lesdites couches de caisses 1 superposées audit poste 7 de palettisation en vue d'une dépose sur la nouvelle palette 2.

Le procédé consiste également à effectuer simultanément le transfert des couches de caisses 1 superposées vers le poste 7 de palettisation et la mise en place de nouveaux rangs de caisses 1 sur la table 25 principale de formation de la couche initiale de caisses.

Le procédé consiste aussi, pour réaliser le calibrage de chaque couche de caisse 1 au niveau du poste 12 de préparation des couches et de pré-empilage :
- à stopper les caisses 1 sur la butée 40 transversale située à l'extrémité aval dudit poste 12 pour resserrer longitudinalement lesdites caisses 1 au moyen de chaque table 25 ou 26, 26', de préparation des couches,
- à resserrer transversalement les caisses 1 constituant chaque couche, au moyen de taquets 47 latéraux qui bordent ledit poste 12 de préparation des couches et qui sont mobiles au-dessus de la table (25, 26, 26'), qui porte la couche correspondante et,
- à resserrer longitudinalement lesdites caisses 1 par l'intermédiaire de la table 25, 26, 26', correspondante, sous l'effet de l'adhérence entre les différentes caisses 1 et ladite table correspondante, par un déplacement longitudinal de ladite table correspondante dans un sens allant de la table 10 de préparation des rangs de caisses vers le poste 7 de palettisation.

## Revendications

1. Palettiseur constitué, sur un même châssis (29) général :
- d'une zone (3) pour la préparation de chaque couche de caisses, laquelle zone (3) comprend :
- un convoyeur (8) d'amenée des caisses (1),
- un poste (9) de préparation des groupes ou rangs de caisses (1),
- un poste (12) de préparation de chaque couche de caisses (1),
- d'une zone (4) pour la palettisation proprement dite qui comprend le poste (5) de palettisation et la table (7) de dépose,
- de poussoirs (20) pour déplacer lesdites caisses et couche(s) de caisses de ladite zone (3) de préparation vers ladite zone (4) de palettisation et, les poussoirs comprenant
un premier poussoir (21) qui déplace les groupes ou rangs de caisses entre ledit poste (9) de préparation des groupes ou rangs et le poste (12) de préparation des couches,
et un second poussoir (22) qui déplace la ou les couches de caisses entre ledit poste (12) de préparation et ledit poste (5) de palettisation,
- d'un convoyeur (6) qui amène des palettes (2) vides audit poste (5) de palettisation,
**caractérisé en ce qu'**il comporte, au niveau dudit poste (12) de préparation :
- une table (25) principale qui est mobile verticalement depuis une position haute, pour la préparation de la première couche de caisses, jusqu'à une position basse, en attente d'une autre couche de caisses, laquelle table (25) principale est constituée d'un tapis sans fin motorisé, lequel tapis est notamment utilisé pour mettre en mouvement les caisses et pour les resserrer contre la butée (40) transversale, de façon à calibrer la couche de caisses, dans le sens longitudinal de circulation desdites caisses sur ladite table (25) principale,
- des moyens constitués de taquets (47) latéraux et d'une butée (40) transversale escamotable pour calibrer la couche de caisses au niveau dudit poste (12) de préparation,
- au moins deux tables (26, 26') intérimaires susceptibles de prendre la place de ladite table (25) principale lorsque cette dernière est en position basse avec une ou plusieurs couches de caisses, lesquelles tables (26, 26') intérimaires sont mobiles horizontalement, guidées entre une position active d'occupation de la fenêtre laissée libre par ladite table (25) principale, pour accueillir les groupes ou rangs de caisses et permettre la formation d'une nouvelle couche de caisses, et une position inactive qu'elles atteignent en s'escamotant et en se séparant de ladite nouvelle couche, cette dernière se déposant par simple gravité sur la couche présente sur ladite table (25) principale, au fur et à mesure de l'escamotage de la table (26, 26') intérimaire qui est en fonction.

2. Palettiseur selon la revendication 1, **caractérisé en ce qu'**il comprend, au niveau du poste (12) de préparation, deux tables (26) ,(26') intérimaires identiques qui sont constituées chacune d'un panneau souple confectionné avec des rouleaux (30) de faible diamètre montés sur roue libre, lesquelles tables (26) et (26') sont montées de façon opposées l'une par rapport à l'autre sur des chaînes (31) sans fin et l'ensemble forme une sorte de noria, lesquelles chaînes (31) sans fin sont disposées latéralement, de part et d'autre du poste (12), guidées dans un cadre (36) porté par le châssis (29) général et qui s'étend autour de la table (25) principale, et l'espace libre entre les deux tables (26, 26') intérimaires correspond au moins à la longueur de la surface d'accueil de ladite table (25) principale pour permettre le passage de cette dernière lors de sa mise en position active pour accueillir des rangs de caisses, lesdites chaînes (31) sans fin étant animées d'un mouvement séquentiel d'avance dans un sens qui correspond au sens d'avancement des couches de caisses vers le poste (5) de palettisation.

3. Palettiseur selon la revendication 2, **caractérisé en ce que** les rouleaux (30) de chaque table (26, 26') intérimaire, sont montés sur des paliers comportant une roue libre (53) de façon à mettre en mouvement les caisses et de les resserrer contre la butée (40) transversale afin de calibrer automatiquement la couche de caisses selon le schéma de palettisation, au fur et à mesure de l'escamotage desdits rouleaux (30) lors de la dépose de cette couche de caisses sur la couche de caisses qui se situe sur la table (25) principale.

4. Palettiseur selon la revendication 1, **caractérisé en ce qu'**il comporte des moyens pour calibrer chaque couche de caisses selon le schéma de palettisation, lesquels moyens sont constitués, d'une part, d'une butée (40) escamotable qui est disposée transversalement par rapport au sens de défilement des caisses sur le poste (12) de préparation et d'empilage des couches de caisses, à l'extrémité aval dudit poste (12) de préparation, et, d'autre part, de taquets (47) disposés latéralement de chaque côté dudit poste (12) de préparation,

5. Palettiseur selon la revendication 4, **caractérisé en ce qu'**il comporte une butée (40) transversale qui est aménagée et positionnée de telle façon qu'en position inactive, elle fait office de sole pour réaliser la jonction entre la table (25) principale et la table (7) du poste (5) de palettisation.

6. Palettiseur selon la revendication 1, **caractérisé en ce que** la table (25) principale comprend un bâti (27) qui est porté par un berceau (28), lequel berceau (28) s'étend transversalement au-delà des cadres (36) de la noria, et il est guidé verticalement sur des poteaux (37, 38) qui font partie du châssis (29) général sur lequel sont fixés lesdits cadres (36), et il est manoeuvré dans le sens vertical par l'intermédiaire d'un mécanisme intégré dans lesdits poteaux dudit châssis (29), lequel mécanisme est constitué de chaînes (60) solidaires dudit berceau (28), lesquelles chaînes (60) sont disposées dans lesdits poteaux latéraux (37, 38) et elles sont entraînées par un servomoteur (45) commun.

7. Procédé de préempilage de plusieurs couches de caisses (1), pour temporiser l'opération de palettisation de ces différentes couches sur un palettiseur selon la revendication 1, **caractérisé en ce qu'**il consiste :
- à préparer une couche de caisses sur la table (25) principale à partir d'un groupe de caisses (1) préalablement formés ;
- à calibrer cette couche de caisses selon le schéma de palettisation et à la mettre au format de la palette (2) d'accueil, sur la dite table (25) principale ;
- à escamoter verticalement ladite table (25) principale, d'une hauteur sensiblement supérieure à l'épaisseur de la couche de caisses (1) ;
- à installer une table (26, 26'), intérimaire dans l'espace laissé libre par ladite table (25) principale ;
- à amener un nouveau groupe de caisses (1), sur ladite table (26, 26'), intérimaire et à le calibrer de la même façon que la couche précédente et à la verticale de cette couche précédente ;
- à escamoter ladite table (26, 26'), intérimaire en maintenant cadrée la couche de caisses (1) correspondante pour la déposer directement sur la couche précédente qui est disposée sur ladite table (25) principale, à un niveau inférieur ;
- à ramener, si la nécessité de temporiser est terminée, la table (25) principale au niveau de la table (7) de palettisation, avec ses différentes couches de caisses (1) superposées ; et,
- à transférer lesdites couches de caisses (1) superposées audit poste (7) de palettisation en vue d'une dépose sur la palette (2).

8. Procédé de préempilage de plusieurs couches de caisses (1), selon la revendication 7, **caractérisé en ce qu'**il consiste à effectuer, simultanément, - le transfert des couches de caisses (1) superposées vers le poste (7) de palettisation et - la mise en place de nouveaux rangs de caisses (1) sur la table (25) principale de formation de la couche initiale de caisses.

9. Procédé de préempilage de plusieurs couches de caisses (1), selon la revendication 8, **caractérisé en ce qu'**il consiste, pour réaliser le calibrage de chaque couche de caisse (1) :
- à stopper les caisses (1) sur la butée (40) transversale située à l'extrémité aval du dispositif (12) ou du module de préparation et d'empilage pour resserrer longitudinalement lesdites caisses (1) au moyen de chaque table (25) ou (26, 26') de préparation des couches,
- à resserrer transversalement les caisses (1) constituant chaque couche, au moyen de taquets (47) latéraux bordant ledit dispositif (12) de préparation des couches, lesquels taquets (47) sont mobiles au-dessus de la table (25, 26, 26'), qui porte la couche correspondante et,
- à resserrer longitudinalement lesdites caisses (1) par l'intermédiaire de la table (25, 26, 26') correspondante, sous l'effet de l'adhérence entre les différentes caisses (1) et ladite table correspondante, par un déplacement longitudinal de ladite table correspondante dans un sens allant de la table (10) de préparation des rangs de caisses vers le poste (5) de palettisation.

## Patentansprüche

1. Palettierer, bestehend, auf ein und demselben Gesamtgestell (29), aus:
- einem Bereich (3) zur Bereitung jeder Schachtelschicht, wobei der Bereich (3) Folgendes umfasst:
o einen Förderer (8) zur Zuführung der Schachteln (1),
o eine Station (9) zur Vorbereitung der Gruppen bzw. Reihen aus Schachteln (1),
o eine Station (12) zur Bereitung jeder Schicht aus Schachteln (1),
- einem Bereich (4) zur eigentlichen Palettierung, der die Palettierungsstation (5) und den Ablagetisch (7) umfasst,
- Schiebern (20) zum Bewegen der Schachteln und Schachtelschicht(en) vom Bereitungsbereich (3) zum Palettierungsbereich (4), wobei die Schieber einen ersten Schieber (21), der die Schachtelgruppen bzw. -reihen zwischen der Gruppen- bzw. Reihenbereitungsstation (9) und der Schichtbereitungsstation (12) bewegt, und einen zweiten Schieber (22), der die Schachtelschicht(en) zwischen der Bereitungsstation (12) und der Palettierungsstation (5) bewegt, und
- einem Förderer (6), welcher der Palettierungsstation (5) leere Paletten (2) zuführt, **dadurch gekennzeichnet, dass** er in Höhe der Bereitungsstation (12) Folgendes umfasst:
- einen Haupttisch (25), der aus einer oberen Position zur Bereitung der ersten Schachtelschicht in eine untere Position zum Warten auf eine weitere Schachtelschicht vertikal bewegbar ist, wobei der Haupttisch (25) aus einem motorgetriebenen Endlosband besteht, wobei das Band insbesondere dazu dient, die Schachteln zu bewegen und am Queranschlag (40) zusammenzuschieben, um die Schachtelschicht in der Längbewegungsrichtung der Schachteln auf dem Haupttisch (25) zu kalibrieren,
- aus Seitenmarken (47) und einem einfahrbaren Queranschlag (40) bestehende Mittel zum Kalibrieren der Schachtelschicht in Höhe der Bereitungsstation (12),
- zumindest zwei Zwischentische (26, 26'), die geeignet sind, den Platz des Haupttischs (25) einzunehmen, wenn sich dieser mit einer oder mehreren Schachtelschichten in der unteren Position befindet, wobei die Zwischentische (26, 26') horizontal bewegbar sind und geführt werden zwischen einer aktiven Position, in der das durch den Haupttisch (25) freigelegte Fester belegt ist, um die Schachtelgruppen bzw. -reihen aufzunehmen und die Ausbildung einer neuen Schachtelschicht zu ermöglichen, und einer inaktiven Position, die sie erreichen, indem sie eingefahren werden und sich von der neuen Schicht lösen, wobei Letztere im Zuge des Einfahrens des in Betrieb befindlichen Zwischentisch (26, 26') aufgrund der Schwerkraft einfach auf der Schicht, die sich auf dem Haupttisch (25) befindet, abgelegt wird.

2. Palettierer nach Anspruch 1, **dadurch gekennzeichnet, dass** er in Höhe der Bereitungsstation (12) zwei identische Zwischentische (26), (26') umfasst, die jeweils aus einer flexiblen Platte ausgebildet sind, die mit Rollen (30) mit einem geringen Durchmesser ausgestattet ist, welche an einem Freilaufrad angebracht sind, wobei die Tische (26) und (26') einander gegenüberliegend an Endlosketten (31) angebracht sind und die Baugruppe eine Art Schöpfrad bildet, wobei die Endlosketten (31) seitlich auf beiden Seiten der Station (12) angeordnet sind und in einem Rahmen (36) geführt werden, der vom Gesamtgestell (29) getragen wird und der sich um den Haupttisch (25) erstreckt, und wobei der Freiraum zwischen den beiden Zwischentischen (26, 26') zumindest der Länge der Aufnahmefläche des Haupttischs (25) entspricht, um dessen Durchgang zur Positionierung in der aktiven Position zur Aufnahme der Schachtelreihen zu ermöglichen, wobei die Endlosketten (31) durch eine secluenzielle Vorschubbewegung in eine Richtung bewegt werden, die der Vorschubrichtung der Schachtelschichten zur Palettierungsstation (5) entspricht.

3. Palettierer nach Anspruch 2, **dadurch gekennzeichnet, dass** die Rollen (30) jedes Zwischentischs (26, 26') auf Lagern angebracht sind, die ein Freilaufrad (53) aufweisen, um die Schachteln zu bewegen und am Queranschlag (40) zusammenzurücken, um die Schachtelschicht im Zuge des Einfahrens der Rollen (30) während des Ablegens dieser Schachtelschicht auf der Schachtelschicht, die sich auf dem Haupttisch (25) befindet, entsprechend dem Palettierungsschema automatisch zu kalibrieren.

4. Palettierer nach Anspruch 1, **dadurch gekennzeichnet, dass** er Mittel zum Kalibrieren jeder Schachtelschicht entsprechend dem Palettierungsschema umfasst, wobei die Mittel einerseits aus einem einfahrbaren Anschlag (40), der quer zur Laufrichtung der Schachteln an der Station (12) zur Bereitung und Stapelung der Schachtelschichten am stromabwärtigen Ende der Bereitungsstation (12) angeordnet ist, und andererseits aus Marken (47), die auf jeder Seite der Bereitungsstation (12) seitlich angeordnet sind, bestehen.

5. Palettierer nach Anspruch 4, **dadurch gekennzeichnet, dass** er einen Queranschlag (40) umfasst, der so gestaltet und angeordnet ist, dass er in der inaktiven Position als Träger dient, um die Verbindung zwischen dem Haupttisch (25) und dem Tisch (7) der Palettierungsstation (5) herzustellen.

6. Palettierer nach Anspruch 1, **dadurch gekennzeichnet, dass** der Haupttisch (25) einen Unterbau (27) umfasst, der von einer Wiege (28) getragen wird, wobei die Wiege (28) sich quer über die Rahmen (36) des Schöpfrads hinaus erstreckt, vertikal an Pfosten (37, 38) geführt wird, die Bestandteil des Gesamtgestells (29) sind, an dem die Rahmen (36) befestigt sind, und über einen in die Pfosten des Gestells (29) integrierten Mechanismus in vertikaler Richtung bewegt wird, wobei der Mechanismus aus Ketten (60) ausgebildet ist, die mit der Wiege (28) fest verbunden sind, wobei die Ketten (60) in den Seitenpfosten (37, 38) angeordnet sind und durch einen gemeinsamen Servomotor (45) angetrieben werden.

7. Verfahren zur Vorstapelung mehrerer Schichten aus Schachteln (1), um den Vorgang der Palettierung der einzelnen Schichten auf einem Palettierer nach Anspruch 1 zu verzögern, **dadurch gekennzeichnet, dass** es darin besteht:
- auf einem Haupttisch (25) eine Schachtelschicht aus einer Gruppe von zuvor ausgebildeten Schachteln (1) zu bereiten;
- auf dem Haupttisch (25) diese Schachtelschicht entsprechend dem Palettierungsschema zu kalibrieren und in das Format der Aufnahmepalette (2) zu bringen;
- den Haupttisch (25) von einer Höhe, die etwas oberhalb der Dicke der Schachtelschicht (1) liegt, vertikal einzufahren;
- in dem durch den Haupttisch (25) freigelegten Raum einen Zwischentisch (26, 26'), anzuordnen;
- dem Zwischentisch (26, 26') eine neue Gruppe aus Schachteln (1) zuzuführen und diese in derselben Weise wie die vorherige Schicht vertikal zu dieser vorherigen Schicht zu kalibrieren;
- den Zwischentisch (26, 26') einzufahren, während die entsprechende Schachtelschicht (1) ausgerichtet bleibt, um sie direkt auf der vorherigen Schicht, die in einer niedrigeren Höhe auf dem Haupttisch (25) angeordnet ist, abzulegen;
- wenn die Notwendigkeit der Verzögerung nicht mehr besteht, den Haupttisch (25) mit seinen verschiedenen übereinanderliegenden Schichten aus Schachteln (1) auf die Höhe des Palettierungstischs (7) zurückzubringen und
- die übereinanderliegenden Schichten aus Schachteln (1) zur Palettierungsstation (7) zu transferieren, um sie auf der Palette (2) abzulegen.

8. Verfahren zur Vorstapelung mehrerer Schichten aus Schachteln (1) nach Anspruch 7, **dadurch gekennzeichnet, dass** es darin besteht, gleichzeitig
- die übereinanderliegenden Schichten aus Schachteln (1) zur Palettierungsstation (7) zu transferieren und
- neue Reihen von Schachteln (1) auf dem Haupttisch anzuordnen, um die erste Schachtelschicht auszubilden.

9. Verfahren zur Vorstapelung mehrerer Schichten aus Schachteln (1) nach Anspruch 8, **dadurch gekennzeichnet, dass** es zur Kalibrierung jeder Schicht aus Schachteln (1) darin besteht:
- die Schachteln (1) am Queranschlag (40), der sich am stromabwärtigen Ende der Vorrichtung (12) bzw. des Moduls zur Bereitung und Stapelung befindet, zu stoppen, um die Schachteln (1) mit Hilfe des jeweiligen Tischs (25) bzw. (26, 26') zur Bereitung der Schichten zusammenzurücken,
- die Schachteln (1), welche die jeweilige Schicht ausbilden, mit Hilfe von Seitenmarken (47), welche die Schichtbereitungsvorrichtung (12) begrenzen, quer zusammenzurücken, wobei die Marken (47) oberhalb des Tischs (25, 26, 26'), der die entsprechende Schicht trägt, bewegbar sind, und
- die Schachteln (1) über den entsprechenden Tisch (25, 26, 26') aufgrund der Haftwirkung zwischen den einzelnen Schachteln (1) und dem entsprechenden Tisch zusammenzurücken, indem der entsprechende Tisch in einer Richtung, die vom Tisch (10) zur Bereitung der Schachtelreihen zur Palettierungsstation (5) verläuft, längs bewegt wird.

## Claims

1. Palletizer constituted, on a same general chassis (29) by:
- a zone (3) for preparing each layer of boxes, which zone (3) comprises:
- a conveyor (8) for conveying the boxes (1),
- a station (9) for preparing groups or rows of boxes (1),
- a station (12) for preparing each layer of boxes (1),
- a zone (4) for the actual palletization which comprises the palletization station (5) and the deposit table (7),
- pushers (20) for moving said boxes and layer(s) of boxes from said preparation zone (3) towards said palletization zone (4), the pushers comprising
- a first pusher (21) which moves the groups or rows of boxes between said group- or row-preparation station (9) and the layer-preparation station (12), and
- a second pusher (22) which moves the layer or layers of boxes between said preparation station (12) and said palletization station (5), and
- a conveyor (6) which conveys empty pallets (2) to said palletization station (5), **characterized in that** it comprises, at said preparation station (12):
- a main table (25) which is vertically moveable from a high position for preparing the first layer of boxes to a low position standing by for another layer of boxes, which main table (25) is constituted by a motorized endless belt, which belt is used in particular for setting the boxes in motion and pressing them against the transverse abutment (40), in order to calibrate the layer of boxes, in the longitudinal direction of circulation of said boxes on said main table (25),
- means constituted by lateral cleats (47) and the retractable transverse abutment (40) for calibrating the layer of boxes at said preparation station (12),
- at least two interim tables (26, 26') capable of taking the place of said main table (25) when the latter is in the low position with one or more layers of boxes, which interim tables (26, 26') are horizontally moveable, guided between an operative position of occupation of the window left free by said main table (25), in order to receive the groups or rows of boxes and allow a new layer of boxes to be formed, and an inoperative position which they reach by being retracted and separated from said new layer, the latter being deposited on the layer present on said main table (25) by gravity alone, as the interim table (26, 26') which is in operation is retracted.

2. Palletizer according to claim 1, **characterized in that** it comprises, at the preparation station (12), two identical interim tables (26), (26') which are each constituted by a flexible panel produced with rollers (30) with a small diameter mounted on a free wheel, which tables (26) and (26') are mounted opposite each other, on endless chains (31) and the assembly forms a kind of noria, which endless chains (31) are arranged laterally, on each side of the station (12), guided in a frame (36) borne by the general chassis (29) which extends around said main table (25), and the free space between the two interim tables (26, 26') corresponds at least to the length of the receiving surface area of said main table (25) in order to allow the latter to pass through when it is placed in the operative position for receiving rows of boxes, which endless chains (31) are moved sequentially forwards in a direction which corresponds to the direction of advance of the layers of boxes towards the palletization station (5).

3. Palletizer according to claim 2, **characterized in that** the rollers (30) of each interim table (26, 26'), are mounted on bearings comprising a free wheel (53) so as to set the boxes in motion and press them against the transverse abutment (40) in order to automatically calibrate the layer of boxes according to the palletization scheme, as said rollers (30) are retracted during the depositing of this layer of boxes on the layer of boxes which is situated on the main table (25).

4. Palletizer according to claim 1, **characterized in that** it comprises means for calibrating each layer of boxes according to the palletization scheme, which means are constituted, on the one hand, by a retractable abutment (40) which is arranged transversally with respect to the direction of travel of the boxes on the station (12) for preparing and stacking the layers of boxes, at the downstream end of said preparation station (12) and, on the other hand, by cleats (47) arranged laterally on each side of said preparation station (12),

5. Palletizer according to claim 4, **characterized in that** it comprises a transverse abutment (40) which is arranged and positioned so that, in the inoperative position, it acts as a slider bed joining the main table (25) and the table (7) of the palletization station (5).

6. Palletizer according to claim 1, **characterized in that** the main table (25) comprises a support (27) which is borne by a cradle (28), which cradle (28) extends transversally beyond the frames (36) of the noria, and it is guided vertically on posts (37, 38) which form part of the general chassis (29) on which said frames (36) are fixed, and it is manoeuvred in the vertical direction by means of a mechanism integrated into said posts of said chassis (29), which mechanism is constituted by chains (60) firmly fixed to said cradle (28), which chains (60) are arranged in said side posts (37, 38) and they are driven by a common servomotor (45).

7. Method for prestacking several layers of boxes (1) in order to delay the operation of palletizing these different layers on a palletizer according to claim 1, **characterized in that** it consists of:
- preparing a layer of boxes on the main table (25) from a previously formed group of boxes (1);
- calibrating this layer of boxes according to the palletization scheme and putting it into the format of the receiving pallet (2), on said main table (25);
- vertically retracting said main table (25), by a height substantially greater than the thickness of the layer of boxes (1);
- installing an interim table (26, 26') in the space left free by said main table (25);
- conveying a new group of boxes (1) onto said interim table (26, 26') and calibrating it in the same way as the previous layer and vertical to this previous layer;
- retracting said interim table (26, 26') keeping the corresponding layer of boxes (1) framed in order to deposit it directly on the previous layer which is arranged on said main table (25), at a lower level;
- once there is no longer any need for delay, returning the main table (25) to the level of the palletization table (7), with its different superimposed layers of boxes (1); and,
- transferring said superimposed layers of boxes (1) to said palletization station (7) in order to deposit them on the pallet (2).

8. Method for prestacking several layers of boxes (1), according to claim 7, **characterized in that** it consists of simultaneously carrying out, - the transfer of the superimposed layers of boxes (1) towards the palletization station (7) and, - the setting up of new rows of boxes (1) on the main table (25) for formation of the initial layer of boxes.

9. Method for prestacking several layers of boxes (1), according to claim 8, **characterized in that**, in order to carry out the calibration of each layer of boxes (1), it consists of:
- stopping the boxes (1) on the transverse abutment (40) situated at the downstream end of the device (12) or of the preparation and stacking module in order to longitudinally press said boxes (1) by means of each layer-preparation table (25) or (26, 26'),
- transversally pressing the boxes (1) constituting each layer, by means of lateral cleats (47) bordering said layer-preparation device (12), which cleats (47) are moveable above the table (25, 26, 26') which bears the corresponding layer and,
- longitudinally pressing said boxes (1) by means of the corresponding table (25, 26, 26'), under the effect of the adherence between the different boxes (1) and said corresponding table, by a longitudinal movement of said corresponding table in a direction from the table (10) for preparing the rows of boxes towards the palletization station (5).
